# EUROPEAN PATENT SPECIFICATION

(11) **EP 2 378 670 B1**
(45) Date of publication and mention of the grant of the patent: **16.08.2017**
(21) Application number: 11157237.6
(22) Date of filing: 07.03.2011
(51) Int. Cl.: H04B 1/10, H04B 1/26, H04B 1/30

(54) **Device and method for interference resistance in broadband receivers**
Vorrichtung und Verfahren für Störungsresistenz in Breitbandempfängern
Dispositif et procédé de résistance de brouillage dans des récepteurs à bande passante

(30) Priority: 05.03.2010 US 718231
(43) Date of publication of application: 19.10.2011
(73) Proprietor: NXP B.V., 5656 AG Eindhoven (NL)
(72) Inventor: Rechberger, Andreas, Redhill, Surrey RH1 1DL (GB); Winter, Christian, Redhill, Surrey RH1 1DL (GB); Schmidt, Reinhold, Redhill, Surrey RH1 1DL (GB)
(74) Representative: Krott, Michel

(56) References cited:
- WO-A1-2009/156480
- US-A1- 2009 302 966
- US-B1- 7 155 179

## Description

### FIELD OF THE INVENTION

This invention relates generally to the operation of broadband receivers used in spectrally-polluted environments, and more particularly, to such use in environments having jamming signals.

### BACKGROUND OF THE INVENTION

Radio receivers often experience performance degradation when used in spectrally polluted environments. By way of non-limiting example, this problem can be particularly troublesome for ISM band receivers. Causes of this spectral environment pollution can include ISM transmitters such as baby monitors, garage door openers, and wireless temperature sensors, for example, along with other E-M radiation sources such as WLAN access points, microwave ovens and similar devices.

Other radiofrequency bands can experience similar spectral pollution, and so this invention is not intended to be limited to a particular radiofrequency or E-M band. Rather, the principles taught herein are of general applicability.

One solution to the problem of radiofrequency spectral pollution may involve minimizing the bandwidth of a receiver as much as possible in order to reduce the probability that an unwanted signal will be detected by the receiver. However, this strategy of avoidance leads to the single-band receiver, which may be of limited practicality, since users seeking to receive multiple frequency signals may be unlikely to purchase and use multiple receivers to receive those multiple frequency signals. Furthermore, designing devices having multiple single-band receivers would be impractical, expensive, and inefficient.

Accordingly, for reasons of efficiency and performance, it is desirable to have multi-purpose receivers which are sensitive across a bandwidth that, when compared with the actual decoded signal, is typically at least several times greater than the bandwidth of corresponding single-purpose receivers.

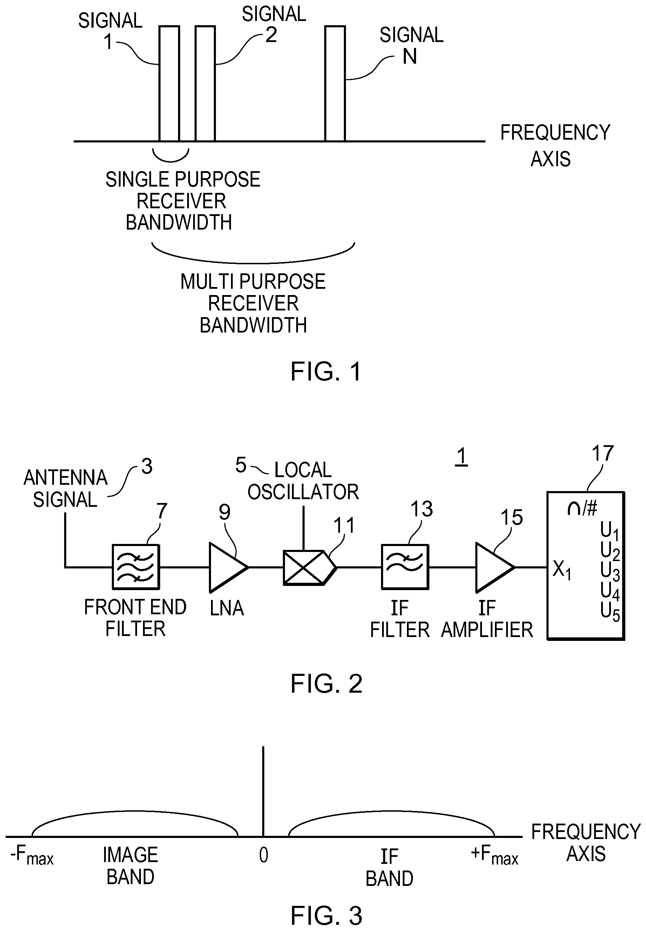

Figure 1 illustrates this bandwidth relationship for a multi-channel receiver that is able to receiver N channels of signals in parallel (N is an integer of value 2 or greater). Such a multi-band receiver preferably has a sensitive bandwidth which depends on the frequency span over which the N channels are separated. However, even in the most compact arrangement, wherein the width of the unused frequencies between adjacent bands are minimized, the sensitive bandwidth of the receiver would be approximately N times the bandwidth of a single-purpose receiver.

It is therefore desirable for the receiver chain of such a multi-purpose receiver to be able to cope with all signals that may be present in the full bandwidth of interest, including any undesirable interfering signals.

Turning now to Figure 2, various components of a digital heterodyne receiver system 1 are shown. In this receiver system 1, an incoming radio signal received by the antenna (not shown) and output by the antenna as antenna signal 3 is filtered by front end filter 7 to obtain the desired frequency signal f_{d}, which is then increased in amplitude by low-noise amplifier 9 ("LNA"). The amplified signal is then combined by mixer 11 with a suitable intermediate frequency ("IF") signal f_{LO} that is produced by local oscillator 5 (this assumes the local oscillator produces a real signal (a pure sinusoidal signal)). As a result, the mixer 11 outputs a combination of four frequencies of signals; the original signal f_{d}, the local oscillator signal f_{LO}, and two new frequencies, f_{d}+f_{LO} and f_{d}-f_{LO}. The combined signal then passes to IF filter 13, which typically is a fixed-tuned filter, and which passes only the modulated signal of interest, f_{d}-f_{LO} (other portions of the signal also could be passed, if so desired). After leaving the IF filter 13, the filtered signal of interest is increased in gain by IF amplifier 15. The amplified signal then is applied to analog-to-digital converter ("ADC") 17, where is it digitized for further processing and eventual output.

In real life a local oscillator produces a complexoid (sin() + jcos()) - which is called a complex mixer, and hence the frequency component f_{d}-f_{LO} is significantly reduced (in real life by more than 20-30 dB, and infinite in the case where there is perfect matching). The concept described below assumes the presence of a complex mixer (otherwise positive and negative frequency band will interfere).

A challenge for the designer of a multi-purpose receiver arises with regard to the possible need for increased bandwidth of the ADC (amplifiers and mixers are generally wide range, and so present less of a problem). The detailed channel selection is performed in the digital domain, after the ADC.

In addition to the bandwidth requirement, which is typically dictated by the device's applications, since such applications determine the total frequency range that the device must function over in order to receive all the desired signals, the signal strength within the device will impact the cost of the device's internal RF components. With continued reference to Figure 2, the amplifiers (both LNA 9 and IF amplifier 15) can be used to adjust the signal strength to a level suitable for processing by the ADC 17.

If, however, a jamming (or unwanted) signal is present and is received by the unshown antenna and included in the antenna signal 3, the complete receiver chain shown in Fig. 2 (excluding the channel selection / demodulation portions) must not only handle the desired signals, but also must handle the jamming / unwanted signal. In this situation, it is important that neither the wanted nor unwanted signals be allowed to drive the receiver into an improper mode of operation.

Such an improper mode of operation could arise if the jammer and the wanted signal share exactly the same frequency, and the power of the jamming signal (or "jammer signal", such terms being usable interchangeably) exceeds the power of the wanted signal, this being an accepted definition of a jamming signal, leading to what is known as co-channel rejection. In other words, the ADC 17, as well as the amplifiers 9 and 15, has to cope with an amplitude difference between the jamming and wanted signals, which is a consequence of the jamming signal. If there is a frequency difference between the jammer and the wanted signal, other factors determine whether there is jamming. What is important to keep in mind is that the jammer should not saturate the receiver chain.

Also, while the jamming signal will not be decoded, signal processing (demodulation) takes place after the ADC, meaning that the jamming signal must not cause the ADC to saturate, since such saturation of the ADC would destroy the wanted signal.

While near zero-IF receivers which perform I/Q compensation in the digital domain, and which therefore forward the entire IF band (both negative and positive frequencies) through to the ADC, are known, such receivers do not actively use a DC notch filter to eliminate jamming signals. Nor would they re-shuffle their narrow band signals to do so.

WO 2009/156480 A1 discloses methods and apparatus for suppressing strong-signal interference in low-IF receivers, in which signal distortions caused by nonlinearities in the receiver circuitry are compensated for.

US 7,155,179 discloses a full-duplex transceiver using a method immunizing itself against self-jamming, in which a receiver receives a signal and simultaneously receives a portion of the power of a transmitted signal as an undesired jamming signal, the centre frequency of the transmitted signal being used for downconverting the received signal to an IF signal, simultaneously downconverting the received signal to an IF signal and downconverting the transmitted jamming signal to near zero frequency.

US 2009/0302966 A1 discloses optimal frequency planning for an integrated communication system with multiple receivers, in which a centre frequency of a low IF signal is adjusted to reduce interference by a second order interference signal to avoid high power portions of the second order interference signal.

### SUMMARY OF THE INVENTION

In accordance with the invention as defined by the appended claims there is provided a multiband heterodyne receiver and a method of attenuating a jamming signal within an incoming signal.

An aspect of the disclosure involves a multiband heterodyne receiver having a source of a received signal, a local oscillator that outputs a local oscillator signal, a mixer that combines the received signal and the local oscillator signal to generate a combined signal having a DC component, a DC processing unit that receives the combined signal and attenuates the DC component of the combined signal so as to output a DC filtered signal, and an analog-to-digital converter that receives the DC filtered signal and converts the DC filtered signal to a digital signal.

Another aspect of the disclosure involves a multiband heterodyne receiver that includes a source of a received signal, a detector which senses when the received signal includes a jamming signal and which in response to the jamming signal outputs an adjustment signal, an adjustable local oscillator that outputs a local oscillator signal having a frequency and receives the adjustment signal, wherein the adjustable local oscillator sets the frequency of the local oscillator signal in response to the adjustment signal, and a mixer that combines the received signal and the local oscillator signal to generate a combined signal. A DC filter receives the combined signal and attenuates a DC component of the combined signal so as to output a DC filtered signal, and an analog-to-digital converter receives the DC filtered signal and converts the DC filtered signal to a digital signal.

In these aspects of the disclosure, the DC filter can be one of a DC notch filter and an IF amplifier that transfers AC signals and attenuates DC signals.

These aspects of the disclosure can include a front end filter that receives the combined signal and outputs a filtered combined signal to the DC filter, and an IF amplifier that receives a DC filtered signal from the DC filter and amplifies that DC filtered signal to obtain an amplified signal, and outputs the amplified signal to the analog-to-digital converter.

These aspects of the disclosure can include a signal separator which receives the DC filtered signal and in response outputs an in-phase component and a quadrature component of the DC filtered signal, and a second analog-to-digital converter, wherein the in-phase component is supplied to one of the two analog-to-digital converters, and the quadrature component is supplied to the other of the two analog-to-digital converters.

It is also envisioned that this disclosure could be used with an analog-to-digital converter that combines the roles of in-phase and quadrature analog-to-digital converters (e.g. a complex Sigma Delta ADC).

In these aspects of the disclosure, the local oscillator signal can have a frequency which is substantially equal to the frequency of a jamming signal within the received signal.

Another aspect of this disclosure involves a method of attenuating a jamming signal within an incoming signal by receiving the incoming signal, mixing the incoming signal with a local oscillator signal to generate a combined signal, attenuating a DC component of the combined signal so as to output a DC filtered signal, and converting the DC filtered signal to a digital signal.
Another aspect of this disclosure involves a method of attenuating a jamming signal within an incoming signal by receiving the incoming signal, detecting if the incoming signal includes a jamming signal and, when the jamming signal is detected, generating an adjustment signal, providing a local oscillator signal having a frequency selected in accordance with the adjustment signal, mixing the incoming signal with the local oscillator signal to generate a combined signal, attenuating a DC component of the combined signal so as to output a DC filtered signal, and converting the DC filtered signal to a digital signal.
In these aspects of the disclosure, the attenuation of the DC component of the combined signal can be performed by one of a DC notch filter and an IF amplifier that transfers AC signals and attenuates DC signals.
These aspects of the disclosure can include receiving the combined signal and outputting a filtered combined signal, the filtered combined signal being used in the attenuating step, and amplifying the DC filtered signal to obtain an amplified signal, the amplified signal being used in the converting step.
These aspects of the disclosure can include causing the local oscillator signal to be separated in frequency from a wanted signal by at least 5 signal channels.
These aspects of the disclosure can include separating the DC filtered signal into an in-phase component and a quadrature component, converting the in-phase component to a corresponding in-phase digital signal, and converting the quadrature component to a corresponding quadrature digital signal.
Another aspect of this disclosure is a method of operating a multiband heterodyne receiver having a source of a received signal (which can include a jamming signal), a local oscillator that outputs a local oscillator signal at a frequency, a mixer that combines the received signal and the local oscillator signal to generate a combined signal, and an analog-to-digital converter that receives the combined signal and converts the combined signal to a digital signal across an ADC band. When a jamming signal is present in the received signal, this method involves selecting the frequency of the local oscillator signal and mixing the local oscillator signal with the received signal so that, due to the selected frequency of the local oscillator signal, the jamming signal is moved out of the ADC band.

### BRIEF DESCRIPTION OF THE DRAWINGS

FIG. 1 compares the bandwidth of a single purpose receiver and a multipurpose receiver;
FIG. 2 depicts schematically various components of a heterodyne receiver;
FIG. 3 depicts the frequency range covered by analog-to-digital converters used in heterodyne receivers;
FIG. 4 depicts schematically various components of a heterodyne receiver using a DC notch filter in accordance with an embodiment of the present invention;
FIG. 5 depicts schematically various components of a heterodyne receiver suitable for jamming detection and processing in accordance with another embodiment of the present invention; and
FIG. 6 depicts adjustment of the local oscillator's frequency to control jamming; it is clear from this drawing that the channel selection has to be able to handle both positive and negative frequency bands.

### DETAILED DESCRIPTION OF EXEMPLARY EMBODIMENTS

Applicant has carefully considered the heterodyne receiver in order to overcome the problems involving signal strength outlined above.

In contrast to a homodyne receiver (which has a zero intermediate frequency ("IF"), due to its operation by direct conversion) a heterodyne receiver, which typically has a low IF relative to the received signal, may suffer from problems caused by spurious images which are produced during the downconversion process, in what is known as image rejection. The image rejection of a heterodyne receiver can be measured in known fashion according to the receiver's image response rejection ratio (the image response rejection ratio compares the strength of the wanted and unwanted signals produced by the receiver).

The problem of image rejection can be solved efficiently using quadrature downconversion (complex mixing), possibly with subsequent filtering, in a manner which is known and which need not be discussed in detail herein.

In order to achieve high image rejection performance, any imperfections in phase and/or amplitude mismatch of the local oscillator are preferably corrected in the digital domain. While it is in theory possible to make such corrections in the analog domain, doing so can be difficult because manufacturing variations in the circuit parts used, as well as temperature variations which may be experienced during receiver operation, each can negatively and inconsistently affect such correction. Digital circuitry is not subject to such manufacturing and environmental variations, and so digital processing is preferred when compensating for the local oscillator's properties.

As shown in Fig. 3, an analog-to-digital converter ("ADC") employed in this manner preferably has to cover the full frequency range extending from the negative side to the positive side of the center frequency of the complex IF band. It will further be noted that the image and IF bands do not extend to the medial DC ("0") frequency, meaning there are small gaps between those bands and the medial DC frequency. Also, it will be understood that quadrature receivers have 2 ADC's, one for the inphase signal I, and the other for the quadrature path Q.

Heterodyne receivers can suffer from problems affecting the frequency band around zero, such as DC offset and 1/f noise ("pink noise").

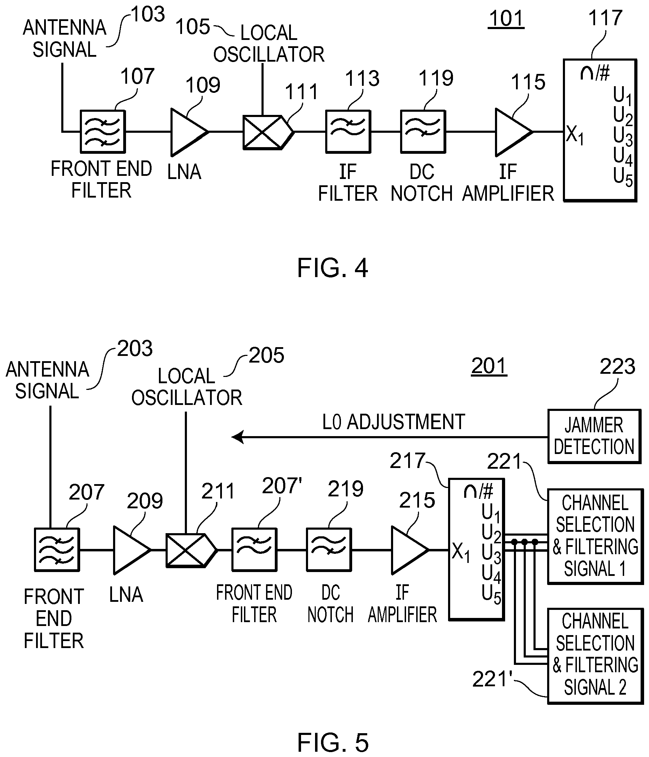

Reference is next made to Fig. 4, which depicts portions of a heterodyne receiver 101 designed in accordance with this invention. In Fig. 4, components corresponding to the components of the heterodyne receiver 1 depicted in Fig. 3 and discussed above are identified using similar reference numbers (i.e., antenna signals 3 and 103 in Figs. 3 and 4, respectively). Accordingly, those corresponding components in Fig. 4 will not now be discussed in detail to the extent that those components operate in a manner similar to the components that are shown in Fig. 3.

Insofar as the heterodyne receiver 101 is shown receiving antenna signals 103 from an antenna (not depicted), this invention is not to be limited to a terrestrial radio system or to radiofrequency signals. This invention could be employed with any suitable signal source, such as, for example, a wire-based signal source, and also could be employed in devices receiving electromagnetic radiation at frequencies which lie outside the radiofrequency spectrum.

Continuing with the Fig. 4 embodiment, in order to solve the 1/f noise problem, this invention provides a high pass filter (a DC notch filter 119) in the receiver chain between the mixer 111 and the ADC 117. More particularly, the notch filter 119 can be located between the IF filter 113 and the IF amplifier 115. Optionally, the DC filter 119 can be combined with the IF filter 113, in which case it is a band-pass filter. Also optionally, the DC filter can be included in the IF amplifier 115, for example, through the use of capacitive coupling (also known as AC coupling), which permits such an IF amplifier to transfer AC signals, and block DC signals (or, in other words, the DC signals are filtered), in a known manner.

The use of a DC notch filter as discussed above is by way of non-limiting example; other suitable DC processor components such as a DC offset compensator could be used (this subtracts the DC offset). Such a compensator could be dynamically controlled. What is desired is that the DC compensator results in a high-pass characteristic, and so eliminates low frequencies, including the DC signal (frequency is 0).

It will be appreciated that, under some circumstances, it may be sufficient to attenuate, rather than block, the DC signals (blocking is the complete attenuation of a signal).

While a range of DC filters or compensators can be used with this invention, provided there is a high pass characteristic having a sufficient degree of attenuation, it should be kept in mind that, the higher the cut-off frequency of the DC filter/compensator, the less accurately will the system need to know the jammer frequency. In balance, the risk of eliminating a wanted signal is increased.

As for IF filter 113, if the signal from local oscillator 105 is a complex mixer, then the IF filter could be omitted - the image band is required. This is desired so that, if there are two data signals and a jammer in between, then following the adjustment of the local oscillator signal LO, one of the data channels will be in the negative band, and another will be in the positive band - the IF filter must not eliminate them. The IF filter may still be required, however, if it is necessary to eliminate signals beyond the analog-to-digital converter, and so it would serve as an anti alias filter). Further, in this invention the local oscillator 105 is set so that the jammer will be eliminated by the high pass filter / DC compensator, and, since the (digital) channel selection can select from both bands (positive and negative), this invention can handle scenarios where the jammer is located at a frequency between two signal channels, not only in the situation where the jammer channel is located either above or below both of the signal channels.

The IF filter can be part of the IF amplifier.

The analog signal output by the IF amplifier 115 is processed by ADC 117 to obtain a digital signal, which is thereafter processed by suitable circuitry (not shown).

By virtue of this receiver arrangement, any component of the antenna signal 103 which (after mixing in the mixer 111 with the LO signal generated by the local oscillator 105) has a frequency close to the DC point of the mixer 111 is not permitted to reach the ADC 117, having been excluded by the DC filter. It should be understood that "close" is a general term and that this invention is meant to extend to any arrangement in which at least a portion of an unwanted signal can be blocked.

A further aspect of this invention involves jammer detection. "Jammer" refers to an unwanted signal, typically also known as a jamming signal.

Fig. 5 depicts portions of a heterodyne receiver 201 configured in accordance with this invention. In Fig. 5, components corresponding to the components of the heterodyne receiver 101 depicted in Fig. 4 and discussed above are identified using similar reference numbers (i.e., antenna signals 103 and 203 in Figs. 4 and 5, respectively). Accordingly, those corresponding components in Fig. 5 will not now be discussed in detail to the extent they operate in a manner similar to the components shown in Fig. 4.

Heterodyne receiver 201 includes a front end filter 207' that receives the output of the mixer 211 (a different front end filter 207 is located in the signal path to receive the antenna signal 203 and output a resulting signal to low-noise amplifier 209, which in turn outputs an amplified signal to mixer 211). The filtered signal output from the front end filter 207' is supplied to the DC notch filter 219, wherein the portion of the signal lying at the notch frequency is filtered. The output of the DC notch filter 219 is then supplied to the IF amplifier 215, which in turn supplies the amplified signal to analog-to-digital converter 217.

As shown in Fig. 5, the analog signal from the IF amplifier 215 is processed by analog-to-digital converter 217 to obtain two digital signals, signals 1 and 2, which are respectively selected and filtered by suitable circuitry 221 and 221' (the precise nature of such selection and filtering by circuitry 221 and 221' is not relevant to this invention). This arrangement is merely exemplary, and other manners of signal usage could be employed (for example, the signal need not be divided in two).

With continued reference to Fig. 5, jamming signal detection can be performed by monitoring the signal health of the wanted signals output by the ADC(s), or by actively monitoring the "empty" spectral band between the signals output by the ADC(s). In the receiver shown in Fig. 5, such monitoring is performed by the jammer detection unit 223. Any other suitable technique for ascertaining the presence of jamming signals, whether now known or hereafter developed, also could be employed in this invention.

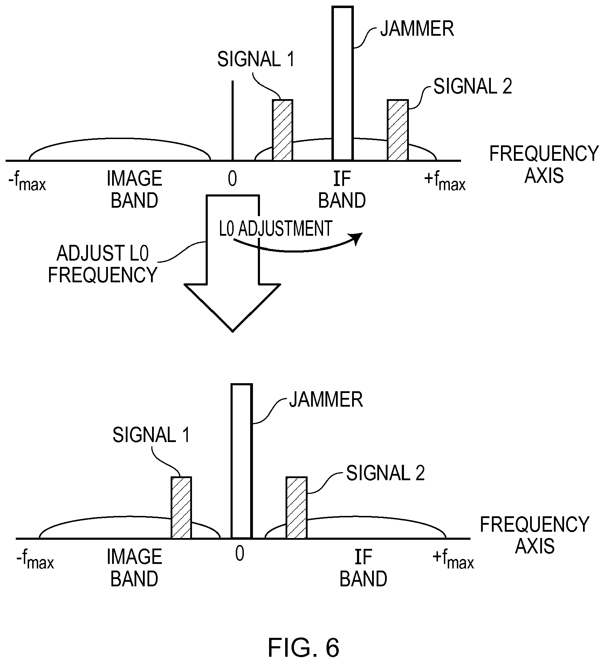

When a jammer is detected, meaning that a jamming signal at a jamming frequency is encountered, the jammer detection unit 223 causes the local oscillator to adjust the frequency of signal f_{LO} so that the jamming signal will be located at the DC point of the mixer, as shown in Fig. 6 (acceptable results also might be obtained if the LO frequency is adjusted so that the jamming signal jammer is located close to, although not precisely at, the DC point of the mixer). In Fig. 6, the frequency of the local oscillator signal f_{LO} preferably is adjusted to have substantially the same value as the frequency of the jamming signal, leaving the jamming signal at the DC point of the mixer. Also, it should be understood that Fig. 6 is merely exemplary - the frequencies and amplitudes of the depicted signals are merely illustrative, and they could vary from what is depicted while remaining within the scope of this invention.

Returning to Fig. 5, once the frequency of the local oscillator signal f_{LO} has been adjusted to place the jamming signal at or near the DC point of the mixer 211, the jamming signal will be eliminated (or at least reduced) by the DC notch filter 219. This filtering prevents the jamming signal from causing the ADC 217 to reach saturation, which as noted above is undesirable.

It can be proven mathematically that, for any given in-band jamming signal, a best fit local oscillator frequency f_{LO} can be found such that the jamming signal is covered by the DC filter 119/219 while the wanted signals are still in the detectable frequency band of the ADC 117/217, provided the following two conditions are satisfied.
Condition 1: The digital receiver is equally capable of receiving a signal in the positive and negative IF spectrum; and
Condition 2: The DC notch filter 119/219 (or AC coupling properties if filtering is performed in the IF amplifier 115/215) has sufficient bandwidth to eliminate the jamming signal, but does not filter the closest wanted signal.
Condition 1 corresponds mathematically to an inversion of the channel selection local oscillator signal (in other words, there is a change in the frequency of the rotor).
Condition 2 limits the jamming capability to jamming signals whose frequency difference is more than the minimal usable IF frequency of the heterodyne receiver.

### Example 1 (Simplified):

For a receiver whose total bandwidth should be 1 MHz, and wherein 1/f noise prevents the usage of the spectral band from -50kHz to 50kHz, the ADCs have to support a bandwidth of 1.05 MHz each. Consequently, the IF frequency spectrum must extend from -1.05MHz to +1.05MHz about the DC frequency (frequency 0).

Assuming there are two evenly spread signals each with 10 kHz bandwidth, the IF band can cover 100 possible channels, arranged as follows (constant bandwidth channel is assumed in this example, but is not required for this invention):
Channel 1 extends from 50 to 60 kHz;
Channel 2 extends from 60 to 70 kHz;
Channel 10 extends from 150 to 160 kHz;
Channel 100 extends from 1040 to 1050 kHz (1.04 to 1.05 MHz).

For statistical evaluation one can introduce 5 pseudo channels (0...50kHz) which are unusable in connection with a wanted signal. Then, a jamming signal can be successfully located on the DC notch and filtered, provided the separation between the jamming signal and any wanted signal is at least 5 channels (50 kHz).

By having one signal in channel 1, and another signal in channel 95, the following situations arise:
If jamming signals are present in Channel 1 ... 5, they disturb signal 1 and cannot be eliminated;
If jamming signals are present in Channels 6 ... 88, those jamming signals can be eliminated;
If jamming signals are present in Channels 89 ... 100, they will disturb signal 2; and
jamming signals in pseudo channels 1 ... 5 do not matter.

Assuming a jamming signal appears uniformly distributed over the system's 1.05 MHz bandwidth (105 channels), there are only 5 + 16 channels where the jamming signal will cause a disturbance, leaving 84 remaining channels where there will not be a problem. Consequently, there is an 84 % probability that a jamming signal will not cause signal degradation.

### Example 2 - (Detailed)

Assuming that the signal channels from -50 to +50 kHz of the center frequency are unusable due to 1/f noise, that means signal channels from 50kHz - 1050 kHz are available, or 100 channels. The receiver frontend therefore should be sensitive over a bandwidth of 2*1050 kHz. Hence for statistical analysis, a total of 210 channels will be considered (again, 10 are unusable).

With ideal filters (for channel selection and for the DC filter) one has a comparable single channel receiver which is sensitive to signals in 12 of these channels (10 unusable DC, the signal channel and its image (negative frequency span)).

Considering a jammer signal which saturates the ADC, the idealized narrow band system is affected if one out of the two sensitive channels is hit.

A multi-band system - without LO adjustment - is affected if one out of the 200 channels (100 positive, 100 negative) is hit by the jammer signal (the negative channels are needed for digital I/Q mismatch correction - although one would claim to have only 100 data channels in the system).

The narrow band system is not affected by jammer signals beyond its signal band (60 kHz in the example) due to its ideal front end filters.

So in the case of single channel reception, a narrow band receiver has a 2/210 probability of being affected by a jammer signal (∼ 0.95%, hence it has 99% immunity to jamming).

Using two (independent) narrow band systems will double the probability that one of those systems will be affected to 4/210.

For an off-the shelf single wide band receiver having two active channels, there is a 200/210 probability (∼ 95%, hence only ∼ 5% immunity) of saturating the ADC, since any jammer within the ADC's bandwidth will cause saturation.

Adjusting the local oscillator's frequency in accordance with this invention, one has 210 channels in total, 2 of which are occupied by a signal, 10 of which are not usable due to the DC notch filter/compensator, 100 of which are used for the signal, and 100 of which are the image channels for those signals.

Numbering the virtual channels as such that image channel 1 (-1050 kHz to -1040 kHz) is labeled channel one and increasing the channel numbering every 10 kHz leads to the following:
Virtual Channel 1: -1050 kHz to -1040 kHz (this is the image channel for signal channel 100)
Virtual Channel 2: -1040 kHz to -1030 kHz
Virtual Channel 100: -60 kHz to -50 kHz
Virtual Channel 101: -50 kHz to -40 kHz (this channel is not usable due to the DC notch filter/compensator)
Virtual Channel 210: 1040 kHz to 1050 kHz (this is signal channel 100)

Locating a signal in signal channels 1 and 95 would correspond to virtual channels 111 and 205. The DC notch is located in virtual channels 101 to 110.

All channel references hereafter are to virtual channel numbering. A jammer in channel 1 will saturate and so one will adjust the local oscillator to shift the DC point by +11 channels such that channel 111 becomes channel 100 (and is shifted out of the DC band again) and channel 205 is transformed to channel 194, moving the jammer out of ADC's band (here, one does not even need the DC notch filter/compensator - just being able to address the image channels as well avoids any problem from the jammer).

One also could also shift the local oscillator by 1100 kHz so that the new negative band is now located exactly where the positive band was (at the lower edge of the DC filter (-50 kHz is now located at 1050 kHz) and as a result, all jammers in channels 1 to 110 are eliminated (this is done without the DC filter, but the system has become sensitive to jammers in the region 1050 kHz and above, which was not the case before).

If a jammer appears between channels 111 and 205, it is necessary to cover it with the DC notch filter/compensator in order to properly block it.

For jammers located in channel 111 there will be a problem - the signal is gone, but a jammer in channel 112 can already be eliminated (by shifting the DC notch to cover channels 112 to 121). Sweeping the jammer upwards the DC notch will follow, until the jammer reaches channel 204 (signal 1 is now in channel 17 and so is still fine).

Having a jammer in channel 205 will destroy signal 2, but in the case of channel 206 it can be dealt with by putting the DC notch in channel 206 to 215, so that signal 1 transforms into channel 6.

For this signal arrangement there are only 2 channels affecting the signal - that is when the jammer hits the signal directly, so there is a 2/210 probability of being affected and a 208/210 chance of being immune to the jammer.

It also should be kept in mind that changing the signal arrangement does change the probabilities of jamming. In case one locates the signals close enough that they can't place a DC notch in between (for example, in channels 111 and 115), then jammers in channel 112 to 114 will disturb the signals as well. Using more signals will makes things more complicated.

Also, it should be kept in mind that no filter is ideal, and so neither a single channel narrow band system, whose ADC is only sensitive to a 10 (20) kHz span, nor the DC notch which cuts off every signal at 40 kHz but does not harm the data at 50 to 60 kHz can be built. Digital filters can be made reasonably ideal (assuming one is willing to spend the silicon area and/or accept the associated current consumption) and arbitrarily narrow band. However, for analog filters, this is substantially more difficult.

So in comparison, a single purpose receiver would have a probability of 95 % that a jamming signal would not cause signal degradation (1 out of 105 channels).

Also for comparison, a traditional multi-purpose receiver has a probability of just 4,8 % that a jamming signal would not cause signal degradation (100 out of 105 channels).

Insofar as the foregoing example is based upon arbitrarily selected numbers, it should be kept in mind that the approximately 95% value for the "ideal" receiver (single-purpose) is quite theoretic because front end filtering with a 10 kHz bandwidth is unrealistic. Nevertheless, the benefits of this invention are apparent.

Among the benefits of this invention is that it can utilize convention components such as fixed DC notch filters and IF amplifiers, which can effect filtering through capacitive coupling (AC-coupling). Also, configurable analog notch filters are not required, since the LO frequency is controlled instead to accomplish filtering of the unwanted jamming signal.

Various exemplary embodiments are described in reference to specific illustrative examples. The illustrative examples are selected to assist a person of ordinary skill in the art to form a clear understanding of, and to practice the various embodiments. However, the scope of systems, structures and devices that may be constructed to have one or more of the embodiments, and the scope of methods that may be implemented according to one or more the embodiment, are in no way to the specific illustrative examples that are presented. On the contrary, as will be readily recognized by persons of ordinary skill in the relevant arts based on this description, many other configurations, arrangements, and methods according to the various embodiments may be implemented.

The present invention has been described with respect to particular embodiments and with reference to certain drawings, but the invention is not limited thereto, but rather, is set forth only by the claims. The drawings described are only schematic and are non-limiting. In the drawings, for illustrative purposes, the size of various elements may be exaggerated and not drawn to a particular scale. Any frequencies discussed herein are exemplary and non-limiting, and it is intended that this invention encompasses inconsequential variations in the relevant tolerances and properties of components and modes of operation thereof. Imperfect practice of the invention is intended to be covered.

Where the term "comprising" is used in the present description and claims, it does not exclude other elements or steps. Where an indefinite or definite article is used when referring to a singular noun, e.g. "a" "an" or "the", this includes a plural of that noun unless something otherwise is specifically stated. Hence, the term "comprising" should not be interpreted as being restricted to the items listed thereafter; it does not exclude other elements or steps, and so the scope of the expression "a device comprising items A and B" should not be limited to devices consisting only of components A and B. This expression signifies that, with respect to the present invention, the only relevant components of the device are A and B.

## Claims

1. A multiband heterodyne receiver (201), comprising:
a receiver configured to receive a received signal;
a detector (223) which is configured to sense when the received signal includes a jamming signal and which, in response to the jamming signal, is configured to output an adjustment signal;
an adjustable local oscillator (205) that is configured to output a local oscillator signal having a frequency and receive the adjustment signal, wherein the adjustable local oscillator is configured to set the frequency of the local oscillator signal to have substantially the same value as the frequency of the jamming signal in response to the adjustment signal;
a mixer (211) that is configured to combine the received signal and the local oscillator signal to generate a combined signal in which the jamming signal is located at a DC frequency;
a DC filter (219) that is configured to receive the combined signal and attenuate a DC component of the combined signal so as to output a DC filtered signal; and
an analog-to-digital converter (217) that is configured to receive the DC filtered signal and convert the DC filtered signal to a digital signal.

2. The multiband heterodyne receiver (201) according to claim 1,
wherein the DC filter (219) is one of a DC notch filter and an IF amplifier that are configured to transfer AC signals and attenuate DC signals.

3. The multiband heterodyne receiver (201) according to claim 1, wherein the detector (223) is configured to sense when the received signal includes a jamming signal by monitoring the digital signal provided by the analog-to-digital converter (219).

4. The multiband heterodyne receiver (201) according to claim 1, wherein the detector (223) is configured to sense when the received signal includes a jamming signal by monitoring a spectral band between digital signals output by the analogue-to-digital converter (219).

5. The multiband heterodyne receiver (201) according to claim 1, wherein the analogue-to-digital converter (219) comprises a digital receiver that is configured to receive signals in both positive and negative Intermediate Frequency spectra.

6. A method of attenuating a jamming signal within an incoming signal, comprising:
receiving the incoming signal;
detecting if the incoming signal includes the jamming signal and, when the jamming signal is detected, generating an adjustment signal;
providing a local oscillator signal having a frequency selected to have substantially the same value as the frequency of the jamming signal in accordance with the adjustment signal;
mixing the incoming signal with the local oscillator signal to generate a combined signal in which the jamming signal is located at a DC frequency;
attenuating a DC component of the combined signal so as to output a DC filtered signal; and
converting the DC filtered signal to a digital signal.

7. The method according to claim 6,
wherein attenuating of the DC component of the combined signal is performed by one of a DC notch filter and an IF amplifier that transfers AC signals and attenuates DC signals.

8. The method according to claim 6, further comprising:
receiving the combined signal and outputting a filtered combined signal, the filtered combined signal being used in the attenuating step; and
amplifying the DC filtered signal to obtain an amplified signal, the amplified signal being used in the converting step.

9. The method according to claim 6, wherein detecting if the incoming signal includes the jamming signal comprises monitoring the digital signal provided by the analog-to-digital converter.

10. The method according to claim 6, wherein detecting if the incoming signal includes the jamming signal comprises monitoring a spectral band between digital signals output by the analogue-to-digital converter.

11. The method according to claim 6, wherein converting the DC filtered signal comprises converting signals in both positive and negative Intermediate Frequency spectra.

## Patentansprüche

1. Ein Multiband Überlagerungsempfänger (201) aufweisend:
einen Empfänger, welcher konfiguriert ist zum Empfangen eines empfangenen Signals;
einen Detektor (223), welcher konfiguriert ist zum Erfassen, wenn das empfangene Signal ein Störsignal enthält, und welcher, als Reaktion auf das Störsignal, konfiguriert ist zum Ausgeben eines Einstellungssignals;
einen einstellbaren lokalen Oszillator (205), welcher konfiguriert ist zum Ausgeben eines lokalen Oszillatorsignals, welches eine Frequenz hat, und zum Empfangen des Einstellungssignals, wobei der einstellbare lokale Oszillator konfiguriert ist, die Frequenz des lokalen Oszillatorsignals einzustellen, so dass das lokale Oszillatorsignal im Wesentlichen den gleichen Wert hat wie die Frequenz des Störsignals, als Reaktion auf das Einstellungssignal;
einen Mischer (211), welcher konfiguriert ist zum Kombinieren des empfangenen Signals und des lokalen Oszillatorsignals zum Erzeugen eines kombinierten Signals, in welchem sich das Störsignal bei einer DC Frequenz befindet;
einen DC Filter (219), welcher konfiguriert ist zum Empfangen des kombinierten Signals und zum Abschwächen einer DC Komponente des kombinierten Signals, um ein DC gefiltertes Signal auszugeben; und
einen Analog-Digital-Wandler (217), welcher konfiguriert ist zum Empfangen eines DC gefilterten Signals und zum Konvertieren des DC gefilterten Signals in ein digitales Signal.

2. Der Multiband Überlagerungsempfänger (201) gemäß Anspruch 1,
wobei der DC Filter (219) einer ist von einem Sperrfilter und einem IF Verstärker, welche konfiguriert sind zum Übertragen von AC Signalen und zum Abschwächen von DC Signalen.

3. Der Multiband Überlagerungsempfänger (201) gemäß Anspruch 1, wobei der Detektor (223) konfiguriert ist zum Erfassen, wenn das empfangene Signal ein Störsignal enthält, mittels Überwachens des digitalen Signals, welches mittels des Analog-Digital-Wandlers (219) bereitgestellt wird.

4. Der Multiband Überlagerungsempfänger (201) gemäß Anspruch 1, wobei der Detektor (223) konfiguriert ist zum Erfassen, wenn das empfangene Signal ein Störsignal enthält, mittels Überwachens eines Spektralbands zwischen digitalen Signalen, welche mittels des Analog-Digital-Wandlers (219) ausgegeben werden.

5. Der Multiband Überlagerungsempfänger (201) gemäß Anspruch 1, wobei der Analog-Digital-Wandler (219) einen digitalen Empfänger aufweist, welcher konfiguriert ist zum Empfangen von Signalen in sowohl positiven als auch negativen Zwischenfrequenzspektren.

6. Ein Verfahren zum Abschwächen eines Störsignals in einem eingehenden Signal, aufweisend:
Empfangen des eingehenden Signals;
Detektieren, ob das eingehende Signal ein Störsignal enthält, und wenn das Störsignal detektiert wird, Erzeugen eines Einstellungssignals;
Bereitstellen eines lokalen Oszillatorsignals, welches eine Frequenz hat, welche so ausgewählt ist, dass die Frequenz im Wesentlichen den gleichen Wert hat wie die Frequenz des Störsignals, in Übereinstimmung mit dem Einstellungssignal;
Mischen des eingehenden Signals mit dem lokalen Oszillatorsignal zum Erzeugen eines kombinierten Signals, in welchem sich das Störsignal bei einer DC Frequenz befindet;
Abschwächen einer DC Komponente des kombinierten Signals, um ein DC gefiltertes Signal auszugeben; und
Konvertieren des DC gefilterten Signals in ein digitales Signal.

7. Das Verfahren gemäß Anspruch 6,
wobei das Abschwächen der DC Komponente des kombinierten Signals durchgeführt wird mittels einem von einem DC Sperrfilter und einem IF Verstärker, welcher AC Signale überträgt und DC Signale abschwächt.

8. Das Verfahren gemäß Anspruch 6, ferner aufweisend:
Empfangen des kombinierten Signals und Ausgeben eines gefilterten kombinierten Signals, wobei das gefilterte kombinierte Signal in dem Abschwächen Schritt verwendet wird; und
Verstärken des DC gefilterten Signals zum Erhalten eines verstärkten Signals, wobei das verstärkte Signal in dem Konvertieren Schritt verwendet wird.

9. Das Verfahren gemäß Anspruch 6, wobei das Detektieren, ob das eingehende Signal das Störsignal enthält, aufweist
Überwachen des digitalen Signals, welches mittels des Analog-Digital-Wandlers bereitgestellt wird.

10. Das Verfahren gemäß Anspruch 6, wobei das Detektieren, ob das eingehende Signal ein Störsignal enthält, aufweist
Überwachen eines Spektralbands zwischen digitalen Signalen, welche mittels des Analog-Digital-Wandlers ausgegeben werden.

11. Das Verfahren gemäß Anspruch 6, wobei das Konvertieren des DC gefilterten Signals aufweist
Konvertieren von Signalen in sowohl positive als auch negative Zwischenfrequenzspektren.

## Revendications

1. Récepteur hétérodyne multibande (201), comprenant :
un récepteur configuré pour recevoir un signal reçu ;
un détecteur (223) qui est configuré pour détecter lorsque le signal reçu comprend un signal brouilleur et qui, à la suite du signal brouilleur, est configuré pour transmettre un signal d'ajustement ;
un oscillateur local ajustable (205) qui est configuré pour transmettre un signal d'oscillateur local ayant une fréquence et recevoir le signal d'ajustement, dans lequel l'oscillateur local ajustable est configuré pour régler la fréquence du signal d'oscillateur local de sorte à avoir sensiblement la même valeur que la fréquence du signal brouilleur à la suite du signal d'ajustement ;
un mélangeur (211) qui est configuré pour combiner le signal reçu et le signal d'oscillateur local pour générer un signal combiné dans lequel le signal brouilleur est localisé à une fréquence CC ;
un filtre côté courant continu (219) qui est configuré pour recevoir le signal combiné et atténuer une composante continue du signal combiné de sorte à transmettre un signal CC filtré ; et
un convertisseur analogique-numérique (217) qui est configuré pour recevoir le signal CC filtré et convertir le signal CC filtré en un signal numérique.

2. Récepteur hétérodyne multibande (201) selon la revendication 1,
dans lequel le filtre côté courant continu (219) est un filtre coupe-bande CC ou un amplificateur fréquence intermédiaire (FI) qui sont configurés pour transférer des signaux CA et atténuer des signaux CC.

3. Récepteur hétérodyne multibande (201) selon la revendication 1, dans lequel le détecteur (223) est configuré pour détecter lorsque le signal reçu comprend un signal brouilleur en surveillant le signal numérique fourni par le convertisseur analogique-numérique (219).

4. Récepteur hétérodyne multibande (201) selon la revendication 1, dans lequel le détecteur (223) est configuré pour détecter lorsque le signal reçu comprend un signal brouilleur en surveillant une bande spectrale entre des signaux numériques transmis par le convertisseur analogique-numérique (219).

5. Récepteur hétérodyne multibande (201) selon la revendication 1, dans lequel le convertisseur analogique-numérique (219) comprend un récepteur numérique qui est configuré pour recevoir des signaux dans des spectres de fréquence intermédiaire à la fois positifs et négatifs.

6. Procédé d'atténuation d'un signal brouilleur dans un signal entrant, consistant :
à recevoir le signal entrant ;
à détecter si le signal entrant comprend le signal brouilleur et lorsque le signal brouilleur est détecté, à générer un signal d'ajustement ;
à fournir un signal d'oscillateur local ayant une fréquence sélectionnée pour avoir sensiblement la même valeur que la fréquence du signal brouilleur en fonction du signal d'ajustement ;
à mélanger le signal entrant avec le signal d'oscillateur local pour générer un signal combiné dans lequel le signal brouilleur est localisé à une fréquence CC ;
à atténuer une composante continue du signal combiné de sorte à transmettre un signal CC filtré ; et
à convertir le signal CC filtré en un signal numérique.

7. Procédé selon la revendication 6,
dans lequel l'atténuation de la composante continue du signal combiné est effectuée soit par un filtre coupe-bande CC, soit par un amplificateur fréquence intermédiaire (FI) qui transfère des signaux CA et atténue des signaux CC.

8. Procédé selon la revendication 6, consistant en outre :
à recevoir le signal combiné et à transmettre un signal combiné filtré, le signal combiné filtré étant utilisé au cours de l'étape d'atténuation ; et
à amplifier le signal CC filtré pour obtenir un signal amplifié, le signal amplifié étant utilisé au cours de l'étape de conversion.

9. Procédé selon la revendication 6, dans lequel le fait de détecter si le signal entrant comprend le signal brouilleur consiste à surveiller le signal numérique fourni par le convertisseur analogique-numérique.

10. Procédé selon la revendication 6, dans lequel le fait de détecter si le signal entrant comprend le signal brouilleur consiste à surveiller une bande spectrale entre des signaux numériques transmis par le convertisseur analogique-numérique.

11. Procédé selon la revendication 6, dans lequel la conversion du signal CC filtré consiste à convertir des signaux dans des spectres de fréquence intermédiaire à la fois positifs et négatifs.
